# EUROPÄISCHE PATENTSCHRIFT

(11) **EP 3 178 884 B1**
(45) Veröffentlichungstag und Bekanntmachung des Hinweises auf die Patenterteilung: **07.02.2018**
(21) Anmeldenummer: 15198353.3
(22) Anmeldetag: 08.12.2015
(51) Int. Cl.: C08L 83/04, C08L 83/06

(54) **WÄSSRIGE [3-(2,3-DIHYDROXYPROP-1-OXY)PROPYL]SILANOLOLIGOMERE-ENTHALTENDE ZUSAMMENSETZUNG, VERFAHREN ZU DEREN HERSTELLUNG UND DEREN VERWENDUNG**
AQUEOUS [3- (2,3-DIHYDROXYPROP-1-OXY) PROPYL] SILANOLOLIGOMER CONTAINING COMPOSITION, METHOD FOR THEIR PREPARATION AND THEIR USE
COMPOSITION CONTENANT [3-(2,3-DIHYDROXYPROP-1-OXY)PROPYL]OLIGOMÈRE DE SILANOL AQUEUX, SON PROCÉDÉ DE FABRICATION ET D'UTILISATION

(43) Veröffentlichungstag der Anmeldung: 14.06.2017
(73) Patentinhaber: Evonik Degussa GmbH, 45128 Essen (DE)
(72) Erfinder: ALBERT, Philipp, 79618 Rheinfelden (DE); KIRBERG, Julia, 79618 Rheinfelden (DE); SCHRANTZ, Jennifer, 79618 Rheinfelden (DE); JUST, Eckard, 79618 Rheinfelden (DE)

(56) Entgegenhaltungen:
- EP-A1- 0 892 911
- DE-A1-102007 045 186

## Beschreibung

Die vorliegende Erfindung betrifft eine Zusammensetzung, die Wasser und ein Gemisch aus [3-(2,3-dihydroxyprop-1-oxy)propyl]silanololigomeren sowie deren Ether enthält, wobei der Anteil an Epoxy- Gruppen, die in Si-Verbindungen gebunden und in der Zusammensetzung vorliegen, ≤ 5 mol.-%, bezogen auf den molaren Anteil an Si in der Zusammensetzung, beträgt. Ferner betrifft die Erfindung ein besonderes Verfahren zur Herstellung einer erfindungsgemäßen Zusammensetzung sowie deren Verwendung.

Organofunktionelle Silane sind Moleküle, die bifunktionell sind. Die Alkoxygruppen am Silizium Ikönnen in Anwesenheit von Wasser und Katalysatoren abgespalten werden. Dabei entstehen reaktive Silanolgruppen, die eine chemische Bindung zu anorganischen Substraten eingehen können. Der organofunktionelle Teil des Moleküls ist durch eine C-Si-Bindung mit dem Silizium verbunden und kann aus verschiedenen organofunktionellen Gruppen bestehen. Besteht die organofunktionelle Gruppe nur aus einer Methyl- bzw. Alkylgruppe, dann können diese Gruppen zwar keine chemische Reaktion eingehen, sie können aber je nach Kettenlänge zu einem starken hydrophoben Effekt führen. Deshalb werden Alkyltrialkoxysilane auch zur Hydrophobierung von Oberflächen eingesetzt. Organofunktionelle Silane sind mit unterschiedlichen organischen Gruppen erhältlich. Das sind z.B. primäre Aminogruppen, sekundäre Aminogruppen, Glycidylether-, Methacryl- , Ureido-, Vinyl-, Mercapto- und Isocyanato-Gruppen. Silane werden unter anderem als Haftvermittler eingesetzt. Für diese Funktion können sie Bestandteil einer Primerlösung sein oder auch als Additiv in einer Lackformulierung eingesetzt werden.
Die VOC-Diskussion macht auch nicht vor den Silanen halt, denn bei der Hydrolyse von Methoxy- bzw. Ethoxysilanen entstehen Methanol oder Ethanol. Darüber hinaus können Silane nicht uneingeschränkt in wässrigen Lackformulierungen eingesetzt werden, weil sie nach dem Formulieren des Lackes weiter hydrolysieren und kondensieren können. Dadurch entstehen Lackformulierungen, die nur sehr kurze Applikationszeiten haben. Zum einen kann die Performance des Lackes sich nach kurzer Zeit verschlechtern oder zum anderen kann es sogar zu einer Gelierung kommen. Eine mögliche Lösung für die Stabilität von Silanen in wässrigen Lackformulierungen könnten wasserbasierte Silansysteme sein. So finden wässrige Silansysteme zunehmend Interesse, da sie weniger bzw. keine organischen Lösungsmittel enthalten und deshalb umweltfreundlicher sind. Darüber hinaus können diese Systeme ohne Ex-Schutz eingesetzt werden. Stabile, wässrige Silansysteme sind nicht einfach durch Mischen von Silanen mit Wasser herstellbar, da viele Silane in der wässrigen Phase unlöslich sind und bei Kontakt mit Wasser hydrolysieren und kondensieren.

EP0675128 lehrt ein Verfahren zur Herstellung stabiler wässriger Silan-Zusammensetzungen. Bei dem Verfahren werden ein wasserlösliches Silan und ein wasserunlösliches Silan in einem definierten Molverhältnis hydrolysiert und kondensiert. Der Hydrolysealkohol wird nach der Reaktion aus dem Gemisch entfernt. Die beanspruchten wässrigen Silanzusammensetzungen enthalten Aminogruppen.

EP0849332 beschreibt einen Prozess zur Herstellung einer Beschichtung. Beispiel 3 zeigt ein Herstellungsschema für ein 3-Glycidyloxypropyltrimethoxysilan Mischsystem. Das Mischsystem enthält als weiteres Silan ein Bernsteinsäureanhydridsilan. Das System wir als Coating auf das Substrat aufgetragen und thermisch gehärtet.

WO1991/019565 offenbart ein Adsorptionsmaterial zur selektiven Entfernung von Lipoprotein sowie Cholestrin aus wässrigen Flüssigkeiten, insbesondere aus Blut, Plasma oder Serum, wobei poröse Glaskörper als festes Trägermaterial für das Adsorptionsmaterial dienen und an deren Oberfläche organische funktionelle Gruppen als Liganden (Liganden = Lig) kovalent gebunden sind. Besagte Liganden weisen dabei mindestens eine Ethylgruppierung mit einer endständigen alpha-/beta-Diolgruppe enthaltende Alkylreste auf und sind über eine Lig-Si-O-Bindung an die Oberfläche des festen Trägermaterials gebunden; ferner weisen diese auch keine freien Silanol-Gruppen auf. Zur Herstellung solcher Adsorptionsmaterialien kann u.a. 3-Glycidyloxypropyltrimethoxysilan eingesetzt werden.

WO2002/050191 offenbart die Herstellung lösungsmittelarmer Sol-Gel-Systeme mit den Verfahrensschritten:
a) Hydrolyse und Kondensation
b) Zugabe von Wasser bis zur Phasentrennung
c) Abtrennung der Kondensatphase
Bei der Hydrolyse und Kondensation können auch 3-Glycidyloxypropyltrimethoxy- oder ethoxysilane eingesetzt werden.

EP1599551 beansprucht ein Verfahren zur Beschichtung einer metallischen Oberfläche mit einer wässrigen Zusammensetzung, die mindestens ein hydrolysierbares oder teilweise hydrolysiertes Silan, ein Metallchelat, einen organischen Filmbildner sowie einen langkettigen Alkohol enthält. Als Silan kann hier auch 3-Glycidylpropyltrimethoxy- oder ethoxysilan eingesetzt werden.

EP1599615 lehrt ein Verfahren zur Beschichtung einer metallischen Oberfläche mit einer wässrigen Zusammensetzung, die mindestens ein hydrolysierbares oder/und zumindest teilweise hydrolysiertes Silan sowie mindestens ein Metallchelat enthält.

EP1599616 ist ein Verfahren zur Beschichtung einer metallischen Oberfläche mit einer wässrigen Zusammensetzung zu entnehmen, wobei die Zusammensetzung mindestens ein hydrolysierbares oder/und zumindest teilweise hydrolysiertes fluorfreies Silan und mindestens ein hydrolysierbares oder/und zumindest teilweise hydrolysiertes fluorhaltiges Silan enthält.

WO2005/090502 beschreibt ein Bindemittel bestehend aus einem wässrigen, filmbildenden polymeren Siloxan. Das Bindemittel kann Alkyl-, Alkenyl-, Methacryl-, Epoxy-, Merkaptan- oder Hydroxyalkylgruppen enthalten. Das Bindemittel wird mit Additiven und Füllstoffen formuliert und für den Korrosionsschutz von Metallen eingesetzt.

WO2006/010388 lehrt die Herstellung eines Bindemittels aus einem Glycidyloxypropyltrialkoxysilan, einem Kieselsol, einem Katalysator und einem Propylzirkonat oder Butyltitanat oder Titanacetylacetonat als Vernetzer. Das Bindemittel kann in Formulierungen oder auch zur Beschichtung verschiedenster Substrate eingesetzt werden.

WO2005/108520 offenbart eine Kleb-/Dichtstoffzusammensetzung bestehend aus einer Komponente A und einer Komponente B. Die Komponente A enthält mindestens einen Katalysator für die Silanvernetzung sowie niedermolekulare organofunktionelle Silane wie z.B. 3-Gylcidyloxypropyltrimethoxysilan.

WO2006/079516 betrifft eine wässrige Bindemittelzusammensetzung, die aus einem Epoxysilan, einem Formylaminopropyltrialkoxysilan sowie einem Tetraalkoxysilan besteht. Die Silane werden sauer hydrolysiert und mit Pigmenten und Additiven formuliert. Das wässrige Beschichtungssystem soll als Shop Primer eingesetzt werden.

WO2009/021776 beschreibt die Herstellung eines oligomeren Epoxysilans und optional eines weiteren Silans durch Hydrolyse und Kondensation in Anwesenheit von Borsäure.

EP0675128 lehrt die Herstellung von stabilen wasserbasierten Silansystemen. In Beispiel 3 wird ein 3-Glycidyloxypropyltrimethoxysilan mit Diethylenglykol und Butyltitanat umgesetzt. Das entstehende Methanol wird entfernt bevor das umgesetzte Silan durch Wasserzugabe hydrolysiert wird.

CN103509188 beschreibt die Herstellung von gefärbten Polysiloxane-Mikropartikeln. Dazu werden Silane in Wasser oder in einem Wasser-Lösungsmittelgemisch zwischen 20 und 80 °C und einem pH von 1,0 bis 6,5 in Anwesenheit einer organischen Säure hydrolysiert. Anschließend wird der pH mit einer Base auf 7,1 bis 13,5 eingestellt. Nach 0,1 bis 24 Stunden können die Mikropartikel abgetrennt und getrocknet werden.

US2007/0179268 beansprucht ein Verfahren zur Herstellung von oligomeren Epoxysilanen. Für die Hydrolyse werden weniger als 1,5 equivalente Wasser eingesetzt.

WO2006/044340 lehrt die Herstellung und Anwendung einer abrasionsbeständigen BeschichtungsZusammensetzung. Die Zusammensetzung enthält mindestens ein Epoxysilan.

JP54063176 beansprucht einen Primer für transparente Kunststoffe, der aus einem hydrolysierten Epoxysilan und einem Aminoalkylsilan besteht.

JP2000239644 beschreibt die Zusammensetzung eines Primers, der neben einem organischen Lösungsmittel und Wasser auch Epoxysilane enthält.

EP0832911 offenbart Organopolysiloxan-haltige Zusammensetzungen auf Wasser-Basis, die im Wesentlichen frei von organischen Lösungsmitteln sind. Untersuchungen an einer gemäß Beispiel 1 hergestellten Zusammensetzung auf Basis von 3-Glycidyloxypropyltrimethoxysilan zeigen, dass die Zusammensetzung neben einem hohen Anteil an intakten Epoxy-Gruppen auch geöffnete Epoxy- Gruppen enthält. Das Ergebnis überrascht.

Wässrige Silansysteme gewinnen immer mehr an Bedeutung, da sie umweltfreundlich und einfach zu handhaben sind. Bei der Anwendung dieser Systeme müssen normalerweise keine besonderen Sicherheitsvorkehrungen bezüglich Explosionsschutz beachtet werden. Solche wässrigen Systeme können als reaktives Bindemittel, Co-Bindemittel, als Primer und auch als Versiegler eingesetzt werden. Silane sind sehr reaktiv und reagieren in Anwesenheit von Luftfeuchtigkeit oder Wasser. Zunächst findet Hydrolyse statt. Dabei werden Silanolgruppen gebildet, die mit anorganischen oder auch organischen Substraten reagieren können. Darüber hinaus können die Silanole auch mit sich selbst unter Ausbildung von Si-O-Si-Bindungen reagieren. Bei entsprechenden Bedingungen kann eine starke Vernetzung in der wässrigen Lösung und damit Gelierung des Systems stattfinden. Sollen organofunktionelle Silane für wässrige Silansysteme eingesetzt werden, dann ist auch die Stabilität der organofunktionellen Gruppe zu berücksichtigen. Beispiel 1 in EP0832911 führt zu einem wässrigen Silansystem mit geöffneten und intakten Epoxy-Gruppen. Nach der Synthese sind noch ca. 20 - 30 % der Epoxygruppen intakt.

Der vorliegenden Erfindung lag daher die Aufgabe zugrunde, ausgehend von einem 3-Glycidyloxypropyltrialkoxysilan eine verbesserte wässrige Zusammensetzung bereitzustellen, die insbesondere in Beschichtungsformulierungen von Epoxyharzen Anwendung findet. Auch sollten solche wässrigen Zusammensetzungen für Beschichtungsformulierungen auf der Basis von Epoxyharzen nach Möglichkeit stabil und anwenderfreundlich zu applizieren sein. Der Aufgabe lag gleichzeitig das Bestreben zugrunde, ein Verfahren zur Herstellung einer solchen wässrigen Zusammensetzung ausgehend von einem 3-Glycidyloxypropyltrialkoxysilan bereitzustellen. Ferner sollte eine solche wässrige Zusammensetzung möglichst arm an VOC sein.

Die gestellt Aufgabe wird erfindungsgemäß entsprechend den Merkmalen in den hier vorliegenden Ansprüchen vorteilhaft gelöst.

So wurde in überraschender Weise ein spezielles Verfahren zur Herstellung einer stabilen wässrigen Zusammensetzung enthaltend Wasser und ein Gemisch aus [3-(2,3-dihydroxyprop-1-oxy)propyl]silanololigomeren sowie deren Ether gefunden, wobei der Anteil an Epoxy-Gruppen, die in Si-Verbindungen gebunden und in der Zusammensetzung vorliegen, vorteilhaft gleich oder deutlich weniger als 5 Mol-% betragen, d.h. kleiner gleich 0,05 Mol Epoxy-Gruppen pro Mol Si in der wässrigen Zusammensetzung, dabei sind unter solchen Epoxy-funktionellen Si-Verbindungen insbesondere Einsatzstoffe wie Glycidyloxyalkylalkoxysilane oder deren Epoxy-funktionellen Reaktionsprodukte zu verstehen.

Darüber hinaus sind erfindungsgemäße Zusammensetzungen geeigneterweise sauer eingestellt und können so neben Wasser und einem Gemische aus [3-(2,3-dihydroxyprop-1-oxy)propyl]silanololigomeren sowie deren Ether eine Säure, vorzugsweise eine organische Säure, besonders vorteilhaft Ameisen- oder Essigsäure als Säure enthalten.

Solche erfindungsgemäßen wässrigen Systeme zeichnen sich insbesondere durch eine gute Löslichkeit besagter [3-(2,3-dihydroxyprop-1-oxy)propyl]silanol-oligomeren-Gemische einschließlich deren Ether und durch ihre ausgezeichnete Lagerstabilität gegenüber Systemen aus, die einen deutlich höheren Anteil an Epoxy-funktionellen Si-Verbindungen enthalten. Erfindungsgemäße Zusammensetzungen sind darüber hinaus vorteilhaft in praktisch jedem Verhältnis mit Wasser verdünnbar.

Darüber hinaus weisen Beschichtungsformulierungen von Epoxyharzen, die eine erfindungsgemäße Zusammensetzung enthalten deutlich verbesserte Applikationseigenschaften auf, als Systeme, die einen deutlich höheren Anteil an Epoxy-funktionellen Si-Verbindungen enthalten. Auf die vorliegenden Anwendungsuntersuchungen wird hingewiesen.

Aus EP0832911 ist zu entnehmen, dass die Aufarbeitung des Umsetzungsprodukts, d.h. die Abtrennung des Alkohols aus dem Produktgemisch nach 8 Stunden beendet wurde. Demgegenüber und darüber hinaus ist die erfindungsgemäße Zusammensetzung vorteilhaft erhältlich, wenn man bei der Herstellung in Schritt 1 als 3-Glycidyloxypropyltrialkoxysilan 3-Glycidyloxypropyltrimethoxysilan oder 3-Glycidyloxypropyltriethoxysilan oder eine Gemisch aus 3-Glycidyloxypropyltrimethoxysilan und 3-Glycidyloxypropyltriethoxysilan einsetzt und in Gegenwart einer Säure eine definierte Menge Wasser, das destilliert, entsalzt bzw. entionisiert ist, zum Beispiel so genanntes "VE-Wasser" bzw. so genanntes "dest. Wasser", innerhalb von 10 bis 30 Minuten zusammenbringt und mischt, wobei der pH-Wert in der Reaktionsmischung bevorzugt im Bereich von 2 bis 4 liegt, in Schritt 2 das Reaktionsgemisch aufheizt und bei 55 bis 70 °C über 1,5 bis 5 Stunden rührt, anschließend in Schritt 3 über mindestens 10 Stunden, vorzugsweise innerhalb von 10 bis 16 Stunden, hier eingeschlossen die Angabe von 11, 12, 13 sowie 14 Stunden, unter vermindertem Druck bei einer Temperatur im Bereich von 40 bis 55 °C ein Alkohol/Wassergemisch destilliert und gleichzeitig gewichtsbezogen durch Wasser, das destilliert, entsalzt bzw. entionisiert ist, ersetzt und so die Destillation mindestens 10 Stunden betreibt und bis das Kopfprodukt der Destillationskolonne letztlich nur Wasser enthält, d.h. frei von Alkohol ist.

Eine so hergestellte wässrige Zusammensetzung enthält als Wirkstoff vorteilhaft im Wesentlichen besagte [3-(2,3-dihydroxyprop-1-oxy)propyl]silanololigomeren-Gemische, d.h. Hydroxy-, Ether- sowie Silanol-Gruppen jedoch praktisch keine Epoxy-Gruppen, und kann als Kopplungsreagenz in Primerlösungen, als Versiegler auf anorganischen Substraten, als reaktives Bindemittel, als Co-Bindemittel für wässrige Formulierungen in unterschiedlichsten Bereichen, jedoch insbesondere für die Formulierung stabiler, anwendungsfreundlicher 2-Komponenten Epoxyharzbeschichtungen mit hervorragendem Erfolg eingesetzt werden.

Darüber hinaus sind erfindungsgemäße Zusammensetzungen gießfähige Flüssigkeiten, hervorragend lagerstabil, in praktisch jedem Verhältnis mit Wasser mischbar und im Wesentlichen frei von Natrium- oder Kaliumionen, d.h. abgesehen von Spuren, wie sie ubiquitär sind.

Gegenstand der vorliegenden Erfindung ist somit eine Zusammensetzung enthaltend Wasser und ein Gemisch aus [3-(2,3-dihydroxyprop-1-oxy)propyl]silanololigomeren sowie deren Ether, wobei der Anteil an Epoxy-Gruppen, die in Si-Verbindungen gebunden und in der Zusammensetzung vorliegen können, kleiner gleich 0,05 Mol Epoxy-Gruppen pro Mol Si in der Zusammensetzung beträgt.

Besonders bevorzugt sind erfindungsgemäße wässrige Zusammensetzungen, wobei der Anteil an Epoxy-Gruppen, die in Si-Verbindungen gebunden und in der Zusammensetzung vorliegen können, 0 bis kleiner gleich 0,04 Mol Epoxy-Gruppen pro Mol Si in der Zusammensetzung beträgt, insbesondere 0,001 bis 0,03 Mol Epoxy-Funktionalität pro Mol Si in der Zusammensetzung.

Ferner enthält eine erfindungsgemäße Zusammensetzung vorteilhaft einen Gehalt an Ameisensäure oder Essigsäure. Bevorzugt weisen erfindungsgemäße wässrige Zusammensetzungen einen pH-Wert von 2 bis 4 auf. Der pH-Wert in einer erfindungsgemäßen Zusammensetzung kann beispielsweise mittels einer Glaselektrode oder mittels pH-Papier bzw. pH-Messstäbchen der Firma Merck in an sich dem Fachmann bekannter Weise bestimmt werden.

Insbesondere umfasst eine erfindungsgemäße Zusammensetzung [3-(2,3-dihydroxyprop-1-oxy)propyl]silanololigomere oder deren Ether gemäß der allgemeinen Formel

Y-Si(OH)₂O_{1/2}[Y-Si(OH)O_{2/2}]ₙ[Y-SiO_{3/2}]ₘ(Y-)Si(OH)₂O_{1/2} (I),

wobei n≥0 und m≥0 sind, Gruppen Y für R"O-CH₂-CH(OR')-CH-O-C₃H₆- stehen und die Gruppen R' und R" gleich oder verschieden sind und für H, Methyl und Ethyl stehen können.

Ferner kann eine erfindungsgemäße Zusammensetzung geeigneterweise auch Silanole der allgemeinen Formel II enthalten

Y-Si(OH)(OR)₂ (II),

wobei Gruppe Y für R"O-CH₂-CH(OR')-CH-O-C₃H₆- steht und die Gruppen R, R' und R" gleich oder verschieden sind und für H, Methyl (Me) und Ethyl (Et) stehen können.

Beispiele für Silanole gemäß Formel II rind:
Y-Si(OH)(OMe)₂, Y-Si(OMe)(OH)₂, Y-Si(OH)(OEt)₂, Y-Si(OEt)(OH)₂, Y-Si(OEt)(OMe)(OH), Y-Si(OH)₃.

Ausgehend von den zuvor genannten Formeln sind folgende Beispiele für Gruppen Y genannt:
HO-CH₂-CH(OH)-CH-O-C₃H₆-, MeO-CH₂-CH(OH)-CH-O-C₃H₆-, EtO-CH₂-CH(OH)-CH-O-C₃H₆-, HO-CH₂-CH(OMe)-CH-O-C₃H₆-, HO-CH₂-CH(OEt)-CH-O-C₃H₆-, MeO-CH₂-CH(OMe)-CH-O-C₃H₆-, EtO-CH₂-CH(OEt)-CH-O-C₃H₆-, MeO-CH₂-CH(OEt)-CH-O-C₃H₆-, EtO-CH₂-CH(OMe)-CH-O-C₃H₆-.

Erfindungsgemäße Zusammensetzungen zeichnen sich als VOC-frei aus, so wird unter VOC-frei in der vorliegenden Anmeldung verstanden, dass eine erfindungsgemäße Zusammensetzung insbesondere kleiner gleich 1 Gew.-% an freiem Alkohol enthält, wobei die Gew.-%-Angabe auf die Zusammensetzung bezogen und der Alkohol aus der Reihe Methanol und Ethanol ausgewählt ist.

Neben besagter [3-(2,3-dihydroxyprop-1-oxy)propyl]silanol-oligomeren-Gemische einschließlich deren Ether können erfindungsgemäße Zusammensetzungen auch organofunktionelle Silanole, wie sie der oben angeführten Formel II zu entnehmen sind, in einem vergleichsweise geringen Anteil enthalten, wobei diese Si-Verbindungen in Summe als Wirkstoff in einer erfindungsgemäßen Zusammensetzung gesehen werden. So weisen erfindungsgemäße wässrige Zusammensetzung geeigneterweise einen Gehalt an Wirkstoff bis 80 Gew.-%, bezogen auf die gesamte Zusammensetzung, auf, vorzugsweise 5 bis 80 Gew.-%, besonders vorzugsweise 10 bis 70 Gew.-%, ganz besonders vorzugsweise 20 bis 60 Gew.-%, insbesondere 30 bis 50 sowie 40 bis 50 Gew.-%. Eine erfindungsgemäße Zusammensetzung weist so vorteilhaft einen Wirkstoffgehalt an Verbindungen der Formel I einschließlich Verbindungen der Formel II bis 80 Gew.-%, d.h. in Summe und bezogen auf die gesamte Zusammensetzung, auf, d.h. auch Verbindungen der Formel II können neben solchen der Formel I optional als Wirkstoff in einer erfindungsgemäßen der Zusammensetzung zugegen sein.

Ebenfalls ist Gegenstand der vorliegenden Erfindung ein Verfahren zur Herstellung einer erfindungsgemäßen Zusammensetzung indem man
in Schritt 1 als 3-Glycidyloxypropyltrialkoxysilan 3-Glycidyloxypropyltrimethoxysilan oder 3-Glycidyloxypropyltriethoxysilan oder eine Gemisch aus 3-Glycidyloxypropyltrimethoxysilan und 3-Glycidyloxypropyltriethoxysilan einsetzt und in Gegenwart einer Säure mit einer definierten Menge Wasser, das destilliert, entsalzt bzw. entionisiert ist, innerhalb von 10 bis 30 Minuten zusammenbringt und mischt,
in Schritt 2 das Reaktionsgemisch aufheizt und bei 55 bis 70 °C über 1,5 bis 5 Stunden rührt, anschließend in Schritt 3 über mindestens 10 Stunden unter vermindertem Druck bei einer Temperatur im Bereich von 40 bis 55 °C eine Alkohol/Wassergemisch destilliert und gleichzeitig gewichtsbezogen durch Wasser, das destilliert, entsalzt bzw. entionisiert ist, ersetzt und die Destillation mindestens 10 Stunden betreibt und bis das Kopfprodukt der Destillationskolonne letztlich nur Wasser enthält. So hergestellte Zusammensetzungen sind VOC-frei bzw. im Wesentlichen frei von Alkohol.

Vorzugsweise setzt man beim erfindungsgemäßen Verfahren in Schritt 1 das 3-Glycidyloxypropyltrialkoxysilan und Wasser in einem molaren Verhältnis von 1 zu 3 bis 60 ein, dabei sind alle daraus für den Fachmann ableitbaren molaren Einsatzstoffverhältnisse eingeschlossen.

Darüber hinaus setzt man beim erfindungsgemäßen Verfahren in Schritt 1 als Säure bevorzugt Ameisensäure oder Essigsäure ein, vorzugsweise in einem molaren Verhältnis von Säure zu 3-Glycidyloxypropyltrialkoxysilan von 0,03 bis 0,06 zu 1, so sind auch hier alle für den Fachmann daraus ableitbaren molaren Einsatzstoffverhältnisse eingeschlossen.

Im Allgemeinen führt man das erfindungsgemäße Verfahren wie folgt durch:
In Schritt 1 wird das 3-Glycidyloxypropyltrialkoxysilan, Wasser und Säure in besagtem Verhältnis innerhalb einer Zeitspanne von 10 bis 30 Minuten zusammengebracht bzw. dosiert und gemischt. Dazu kann man geeigneterweise das Silan vorlegen, Säure in definierter Menge zugeben und unter Durchmischung des Ansatzes die erforderlich Menge VE-Wasser dosieren. Dabei liegt der pH-Wert des Reaktionsgemischs geeigneterweise im Bereich von 2 bis 4. In Schritt 2 wird das Reaktionsgemisch, sofern erforderlich, aufheizt und vorteilhaft bei 55 bis 70 °C über 1,5 bis 5 Stunden gerührt. Anschließend wird in Schritt 3 über mindestens 10 Stunden unter vermindertem Druck bei einer Temperatur im Bereich von 40 bis 55 °C eine Alkohol/Wassergemisch abdestilliert und gleichzeitig gewichtsbezogen durch Wasser, das destilliert, entsalzt bzw. entionisiert ist, ersetzt. Dabei ist die Destillation mindestens über 10 Stunden zu betreiben und bis das Kopfprodukt der Destillationskolonne letztlich nur Wasser enthält, d.h. im Wesentlichen frei von Alkohol ist. Das Zielprodukt fällt geeigneterweise im Sumpf der Destillation an und kann beispielsweise mit VE- bzw. dest. Wasser verdünnt und vorteilhaft auf den gewünschten Wirkstoffgehalt eingestellt werden.

Erfindungsgemäß hergestellte wässrige Zusammensetzung unterscheiden sich klar von Zusammensetzungen, die aus dem Stand der Technik bekannt sind, so sind erfindungsgemäße Zusammensetzungen sowie die nach dem erfindungsgemäße Verfahren hergestellten im Wesentlichen frei von Epoxy-funktionellen Siliciumverbindungen, sie sind lagerstabil und zeichnen sich insbesondere auch durch sehr gute, d.h. nochmals verbesserte anwendungstechnische Eigenschaft in Epoxyharzformulierungen aus.

Somit ist auch Gegenstand der vorliegenden Erfindung eine wässrige Zusammensetzung, die nach dem erfindungsgemäßen Verfahren erhältlich ist.

Weiter ist Gegenstand der vorliegenden Erfindung die Verwendung einer erfindungsgemäßen Zusammensetzung oder eine Zusammensetzung hergestellt bzw. erhältlich nach dem erfindungsgemäßen Verfahren als Komponente in Epoxyharzformulierungen, als Kopplungsreagenz in Primerlösungen, als Versiegler auf anorganischen Substraten, als reaktives Bindemittel sowie als Co-Bindemittel.

Die vorliegende Erfindung wird durch die nachfolgenden Beispiele näher erläutert, ohne den Gegenstand der Erfindung zu beschränken:

### Beispiele:

### Verwendete Chemikalien:

Dynasylan® GLYMO (3-Glycidyloxypropyltrimethoxysilan), Evonik Industries
Ameisensäure 85%ig, BCD Chemie
Araldur 3986, BBC00235V1 Huntsman
Araldite PZ 3961-1, AAC0250900 Huntsman

### Analytische Methoden:

### NMR-Messungen:

Instrument: Bruker
Frequenz: 500,1 MHz (¹H-NMR); 99,3 MHz (²⁹Si-NMR)
Scans: 32 (¹H-NMR); 2000 (²⁹Si-NMR)
Temperatur: 303 K
Lösungsmittel: DMSO
Standard: Tetramethylsilan

### Bestimmung der Viskosität:

Die Viskosität wurde bei 25 °C nach DIN 53019 bestimmt.

### Schichtdickenbestimmung der Beschichtungen:

Die Schichtdicke der ausgehärteten Beschichtungen wurde mit einem Schichtdickenmessgerät Dualscope MP4C von Fischer mit der Messsonde EGAB 1.3 durchgeführt.

### Beispiel 1 (Vergleichsbeispiel aus EP0832911):

354,0 g GLYMO wurden in einer 1 I-Rührapparatur mit Rückflusskühler, Dosiervorrichtung und Destillationsbrücke vorgelegt. 81,0 dest. Wasser und 1,8 g Ameisensäure wurden innerhalb von 15 Minuten dosiert. Der Ansatz wurde 2 h bei 60 °C gerührt. Anschließend wurde innerhalb von 8 h ein Methanol/Wassergemisch abdestilliert und gleichzeitig gewichtsbezogen durch Wasser ersetzt (Druck: 300 -133 mbar, Temperatur: 42 - 52 °C). Danach wurde die Destillation beendet und eine entsprechende Menge dest. Wasser zugegeben, so dass eine Lösung mit w(GLYMO) = 40 % in Wasser entsteht.
¹H-NMR-Messung intakte Epoxy-Gruppen: 23 mol-%
¹H-NMR: (500,1 MHz, DMSO) δ [ppm] = 0,49 (m; vgl. Darstellung 1 Position 2 a und 2 b; CH₂-Si wurde als Referenz verwendet), 1,58 (m), 2,52 (m; vgl. Darstellung 1 Position 7 a; überlagert mit DMSO), 2,72 (m; vgl. Darstellung 1 Position 7 b), 3,0 (m; vgl. Darstellung 1 Position 6), 3,35 (m), 3,79 (m), 4,73 (d), 6,59 (m), 8,15 (s) 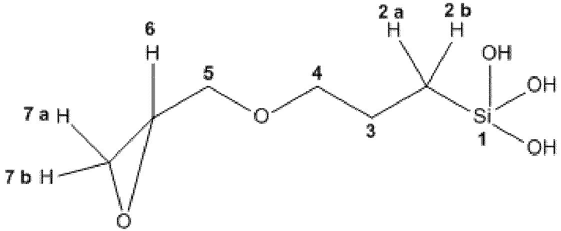 Darstellung 1: Positionen in hydrolysiertem GLYMO

Das Signal bei 0,49 (vgl. Darstellung 1 Position 2 a und 2 b) wird als Referenz für die Summe aller eingesetzten Epoxysilane verwendet (Korrektur um Faktor 0,5, da sich 2 Protonen am Kohlenstoffatom befinden). Das Signal bei der Verschiebung 2,73 (vgl. Darstellung 1 Position 7 b) entsprach dem einen der zwei Protonen an der Epoxy-Gruppe. Das Integral bei dieser Verschiebung muss durch das korrigierte Integral bei 0,49 (vgl. Darstellung 1 Position 2 a) geteilt und mit 100 multipliziert werden.
Der erhaltene Wert entsprach der Anzahl der intakten Epoxy-Gruppen in mol -% im Silan bzw. dem Hydrolyseprodukt.
²⁹Si-NMR: (99,3 MHz, DMSO)) δ [ppm] = - 40,48 (Silan), - 49,51 (M-Struktur), - 57,75 (D-Struktur), - 67,15 (T-Struktur)

### Beispiel 2 (Vergleichsbeispiel aus EP0892911):

In einer 1I-Rührapparatur mit Destillationsbrücke werden 708 g Dynasylan® GLYMO vorgelegt. 162 g Wasser und 3,5 g Ameisensäure (85%ig) wurden gemischt und innerhalb von 15 Minuten dosiert. Die Temperatur stieg hierbei von ca. 20 °C auf 35 °C.

Der Ansatz wurde zwei Stunden bei 60 °C gerührt. Danach wurde innerhalb von 8 Stunden ein Methanol/Wasser-Gemisch abdestilliert und gleichzeitig gewichtsbezogen durch VE-Wasser ersetzt (Druck: 300 - 133 mbar, Temperatur: 40 - 52 °C). Danach wurde die Destillation beendet und eine entsprechende Menge VE-Wasser zugegeben, so dass eine Lösung mit w(GLYMO) = 40 % in Wasser entsteht.
¹H-NMR-Messung intakte Epoxy-Gruppen: 18 mol-%
¹H-NMR: (500,1 MHz, DMSO) δ [ppm] = 0,48 (m; vgl. Darstellung 1 Position 2 a und 2 b; CH₂-Si wurde als Referenz verwendet), 1,57 (m), 2,73 (m; vgl. Darstellung 1 Position 7 b), 3,0 (m; vgl. Darstellung 1 Position 6), 3,35 (m), 3,74 (m), 4,76 (d), 6,61 (m), 8,15 (s)
²⁹Si-NMR: (99,3 MHz, DMSO)) δ [ppm] = - 39,12 (Silan), - 48,57 (M-Struktur), - 57,23 (D-Struktur), - 66,75 (T-Struktur)

### Beispiel 3 (Vergleichsbeispiel aus WO91/19656):

Zu 200 ml VE-Wasser wurden unter Rühren und pH-Kontrolle mit einer Glaselektrode 12 ml Dynasylan® GLYMO tropfenweise zugegeben, wobei der pH der Mischung durch tropfenweise Zugabe von 3 n KOH von 10 auf 5,5 und 5,8 gehalten wurde.

Anschließend wurde so viel Wasser zugegeben, dass die Lösung einen Feststoffgehalt von ca. 5 % besaß.
¹H-NMR-Messung intakte Epoxy-Gruppen: 95 mol-%.
¹H-NMR: (500,1 MHz, DMSO) δ [ppm] = 0,49 (m; vgl. Darstellung 1 Position 2 a und 2 b; CH₂-Si wird als Referenz verwendet), 1,58 (m), 2,52 (m; vgl. Darstellung 1 Position 7 a; überlagert mit DMSO), 2,72 (m; vgl. Darstellung 1 Position 7 b), 3,0 (m; vgl. Darstellung 1 Position 6), 3,35 (m), 3,79 (m), 4,73 (d), 6,59 (m), 8,15 (s)
²⁹Si-NMR: (99,3 MHz, DMSO)) δ [ppm] = - 39,32 (Silan), - 48,73 (M-Struktur), - 57,11; - 58,31 (D-Struktur)

### Beispiel 4 (erfindungsgemäß):

354,0 g GLYMO wurden in einer 1 I-Rührapparatur mit Rückflusskühler, Dosiervorrichtung und Destillationsbrücke vorgelegt. 81,0 g dest. Wasser und 2,2 g Ameisensäure wurden innerhalb von 15 Minuten dosiert. Der Ansatz wurde zwei Stunden bei 60 °C gerührt. Anschließend wurde innerhalb von 10 h ein Methanol/Wassergemisch abdestilliert und gleichzeitig gewichtsbezogen durch Wasser ersetzt (Druck: 300 - 133 mbar, Temperatur: 42 - 52 °C). Danach wurde die Destillation beendet und eine entsprechende Menge Wasser zugegeben, so dass eine Lösung mit w(GLYMO) = 40 % in Wasser entsteht.
¹H-NMR-Messung intakte Epoxy-Gruppen: 0 mol-%
¹H-NMR: (500,1 MHz, DMSO) δ [ppm] = 0,53 (m; vgl. Darstellung 1 Position 2 a und 2 b; CH₂-Si wird als Referenz verwendet), 1,57 (m), 3,55 (m), 4,63 (d)
²⁹Si-NMR: (99,3 MHz, DMSO)) δ [ppm] = - 39,57 (Silan), - 49,04 (M-Struktur), - 57,37 (D-Struktur), - 67,56 (T-Struktur)

### Beispiel 5 (erfindungsgemäß):

1354 g dest. Wasser wurden in einer 2 I-Rührapparatur mit Dosiervorrichtung und Rückflusskühler vorgelegt und mit 2,0 g Ameisensäure (85%ig) versetzt. Über die Dosiervorrichtung wurden 300 g Dynasylan® GLYMO innerhalb von 10 Minuten zugegeben. Anschließend wurde vier Stunden bei 65 °C gerührt. Nachfolgend wurde innerhalb von 10 h ein Methanol/Wassergemisch abdestilliert und gleichzeitig gewichtsbezogen durch Wasser ersetzt (Druck: 300 - 133 mbar, Temperatur: 42 - 52 °C). Danach wurde die Destillation beendet und eine entsprechende Menge Wasser zugegeben, so dass eine Lösung mit w(GLYMO) = 40 % in Wasser entstand.
¹H-NMR-Messung intakte Epoxy-Gruppen: 0 mol-%
¹H-NMR: (500,1 MHz, DMSO) δ [ppm] = 0,70 (m; vgl. Darstellung. 1 Position 2 a und 2 b; CH₂-Si wird als Referenz verwendet), 1,72 (m), 3,57 (m), 4,73 (d)
²⁹Si-NMR: (99,3 MHz, DMSO)) δ [ppm] = - 53,08 (D-Struktur), - 46,92 (T-Struktur)

### Beispiel 6: (Anwendungstechnische Untersuchungen)

### Salzsprühtest nach DIN EN ISO 9227:

### Substrate:

Stahlprüfkörper DC 01 C290

### Reinigung der Metallsubstrate:

Die Stahlprüfkörper wurden in ein Reinigungsbad bestehend aus 10 g Ridoline C 72 (Henkel AG) und 1000 g VE-Wasser bei 60 °C 2 Minuten getaucht und anschließend mit VE-Wasser gespült.

**Tabelle 1: Anwendungstechnische Formulierungen mit einem 2-Komponenten-Epoxyharzsystem**

| Komponenten¹⁾ | Formulierung 1 [g] | Formulierung 2 [g] | Formulierung 3 [g] |
|---|---|---|---|
| Araldite PZ 3961-1 | 92,0 | 92,0 | 92,0 |
| Aradur 3986 | 38,4 | 38,4 | 38,4 |
| Dest. H2O | 28,8 | 28,8 | 28,8 |
| Wässrige Zusammensetzung aus (Vergleichs-)Beispiel 1 | - | - | 1,44 |
| Wässrige Zusammensetzung aus dem erfindungsgemäßen Beispiel 4 | - | 1,44 | - |

| | | | |
|---|---|---|---|
| 1) Araldite PZ-3961 wurde mit dem Aradur 3986-1, dest. H₂O und dem wässrigen Silansystem formuliert. | | | |

### Applikation der Epoxyharzformulierungen auf die Substrate:

Die jeweilige wässrige Epoxyharzformulierung (vgl. Tabelle 1) wurde mit einer 40 µm Spiralrakel auf den gereinigten Stahlblechen (Substrat) aufgezogen und bei 80 °C 20 Minuten gehärtet. Die Trockenschichtdicken der Beschichtungen betrugen 14 - 18 µm.

Nach 1 Tag wurden die beschichteten Stahlbleche im neutralen Salzsprühtest nach DIN EN ISO 9227 geprüft.

Die Bewertung der von einem Ritz ausgehenden Enthaftung wurde nach ISO 4628-8 durchgeführt und sind in Tabelle 2 zusammengestellt.

**Tabelle 2: Ergebnisse aus den Untersuchungen der beschichteten Substrate nach 56 Stunden im Salzsprühnebel (DIN EN ISO 9227):**

| Ergebnis aus Anwendungstest mit | Enthaftung am Ritz des beschichteten Substrats in [mm] |
|---|---|
| Formulierung 1 | 15 |
| Formulierung 2 | 5 |
| Formulierung 3 | 10 |

### Ergebnis:

Die Formulierung 2 mit der wässrigen Zusammensetzung aus dem erfindungsgemäßen Beispiel 4 zeigt eine Enthaftung von 5 mm am Ritz. Dagegen zeigen die Formulierung 3 mit der wässrigen Zusammensetzung aus dem Vergleichsbeispiel 1 eine Enthaftung von 10 mm und die Formulierung 1 ohne den Zusatz eines Silansystem eine Enthaftung von 15 mm.

### Lagerstabilität der Formulierungen:

Für die praktische Anwendung ist eine möglichst geringe Komplexizität wichtig. Formulierungen, die der Endanwender mischen muss, sollten möglichst nur aus 2 Komponenten bestehen.

Mehrkomponentige Systeme haben ein höheres Risiko für eine fehlerhafte Zusammensetzung beim Mischen. Die geprüften Formulierungen könnten aus 3 Komponenten bestehen: dem Epoxyharz (Araldite PZ 3961-1), dem Aminhärter (Aradur 3986) sowie dem wässrigen Silansystem. Ein einfacheres System aus 2 Komponenten wäre jedoch für den Endanwender wesentlich einfacher in der Handhabung. Um diese zu prüfen, wurden die Haltbarkeiten der Formulierungen 1 bis 3 untersucht. Dazu wurde der Aminhärter (Aradur 3986) jeweils mit dem wässrigen Silansystem aus (Vergleichs-)Beispiel 1 sowie aus dem erfindungsgemäßen Beispiel 4 in den in Tabelle 1 gezeigten Mengen gemischt und die Viskosität der Formulierungen in zeitlichen Abständen gemessen. Die Ergebnisse werden in Tabelle 3 zusammengestellt.

**Tabelle 3: Viskosität**

| Messung nach | Viskosität einer Formulierung aus 38,4 g Aradur 3986 + 1,44 g Zusammen-setzung aus (Vergleichs-)Beispiel 1 | Viskosität einer Formulierung aus 38,4 g Aradur 3986 + 1,44 g Zusammensetzung aus Beispiel 4 | Viskosität von Aradur 3986 |
|---|---|---|---|
| [Minuten] | [mPa s] | [mPa s] | [mPa s] |
| 0 | 4,96 | 4,96 | 17,70 |
| 51 | 5,38 | 4,96 | 17,70 |
| 81 | 13,77 | 4,96 | 17,70 |
| 119 | 31,92 | 4,91 | 17,70 |
| 158 | 93,82 | 4,89 | 17,70 |
| 192 | 266,33 | 4,88 | 17,70 |
| 226 | 775,33 | 4,88 | 17,70 |

### Ergebnis:

Während die Formulierung aus Aradur 3986 mit dem wässrigen Zusammensetzung aus (Vergleichs-)Beispiel 1 schon nach 51 Minuten einen deutlichen Viskositätsanstieg zeigt, der nach 226 Minuten auf 775 mPa s ansteigt, zeigt die Mischung mit dem erfindungsgemäßen wässrigen Zusammen-setzung aus Beispiel 4 eine konstante Viskosität wie auch das reine Produkt Aradur 3986.

## Patentansprüche

1. Zusammensetzung enthaltend Wasser und ein Gemisch aus [3-(2,3-dihydroxyprop-1-oxy)propyl]silanololigomeren sowie deren Ether, wobei der Anteil an Epoxy-Gruppen, die in Si-Verbindungen gebunden und in der Zusammensetzung vorliegen können, kleiner gleich 0,05 Mol Epoxy-Gruppen pro Mol Si in der Zusammensetzung beträgt.

2. Zusammensetzung nach Anspruch 1,
wobei der Anteil an Epoxy-Gruppen, die in Si-Verbindungen gebunden und in der Zusammensetzung vorliegen können, 0 bis 0,04 Mol Epoxy-Gruppen pro Mol Si in der Zusammensetzung beträgt.

3. Zusammensetzung nach Anspruch 1 oder 2,
wobei die Zusammensetzung [3-(2,3-dihydroxyprop-1-oxy)propyl]silanololigomere oder deren Ether gemäß der allgemeinen Formel I enthält
Y-Si(OH)₂O_{1/2}[Y-Si(OH)O_{2/2}]ₙ[Y-SiO_{3/2}]ₘ(Y-)Si(OH)₂O_{1/2} (I),
wobei n≥0 und m≥0 sind, Gruppen Y für R"O-CH₂-CH(OR')-CH-O-C₃H₆- stehen und die Gruppen R' und R" gleich oder verschieden sind und für H, Methyl und Ethyl stehen können.

4. Zusammensetzung nach einem der Ansprüche 1 bis 3,
wobei die Zusammensetzung Silanole der allgemeinen Formel II enthalten kann
Y-Si(OH)(OR)₂ (II),
wobei Gruppe Y für R"O-CH₂-CH(OR')-CH-O-C₃H₆- steht und die Gruppen R, R' und R" gleich oder verschieden sind und für H, Methyl und Ethyl stehen können.

5. Zusammensetzung nach einem der Ansprüche 1 bis 4,
wobei die Zusammensetzung einen Wirkstoffgehalt an Verbindungen der Formel I einschließlich Verbindungen der Formel II bis 80 Gew.-%, bezogen auf die gesamte Zusammensetzung, aufweist.

6. Zusammensetzung nach einem der Ansprüche 1 bis 5,
wobei die Zusammensetzung sauer eingestellt ist und Ameisensäure oder Essigsäure enthält.

7. Zusammensetzung nach einem der Ansprüche 1 bis 6,
wobei die Zusammensetzung kleiner gleich 1 Gew.-% an freiem Alkohol enthält, wobei die Gew.-%-Angabe auf die Zusammensetzung bezogen ist und der Alkohol aus der Reihe Methanol und Ethanol ausgewählt ist.

8. Zusammensetzung nach einem der Ansprüche 1 bis 7,
wobei die Zusammensetzung mit Wasser verdünnbar ist.

9. Verfahren zur Herstellung einer Zusammensetzung nach einem der Ansprüche 1 bis 8, indem man
- in Schritt 1 als 3-Glycidyloxypropyltrialkoxysilan 3-Glycidyloxypropyltrimethoxysilan oder 3-Glycidyloxypropyltriethoxysilan oder eine Gemisch aus 3-Glycidyloxypropyltrimethoxysilan und 3-Glycidyloxypropyltriethoxysilan einsetzt und in Gegenwart einer Säure mit einer definierten Menge Wasser, das destilliert, entsalzt bzw. entionisiert ist, innerhalb von 10 bis 30 Minuten zusammenbringt und mischt,
- in Schritt 2 das Reaktionsgemisch aufheizt und bei 55 bis 70 °C über 1,5 bis 5 Stunden rührt,
- anschließend in Schritt 3 über mindestens 10 Stunden unter vermindertem Druck bei einer Temperatur im Bereich von 40 bis 55 °C eine Alkohol/Wassergemisch destilliert und gleichzeitig gewichtsbezogen durch Wasser, das destilliert, entsalzt bzw. entionisiert ist, ersetzt und die Destillation über mindestens 10 Stunden betreibt und bis das Kopfprodukt der Destillationskolonne letztlich nur Wasser enthält.

10. Verfahren nach Anspruch 9,
dass man in Schritt 1 das 3-Glycidyloxypropyltrialkoxysilan und Wasser in einem molaren Verhältnis von 1 zu 3 bis 60 einsetzt.

11. Verfahren nach Anspruch 9 oder 10,
dass man in Schritt 1 als Säure Ameisensäure oder Essigsäure in einem molaren Verhältnis zu 3-Glycidyloxypropyltrialkoxysilan von 0,03 bis 0,06 zu 1 einsetzt.

12. Wässrige Zusammensetzung erhältlich nach einem der Ansprüche 9 bis 11.

13. Verwendung einer Zusammensetzung nach einem der Ansprüche 1 bis 8 oder erhältlich nach Anspruch 12 oder hergestellt nach einem der Ansprüche 9 bis 11, als Komponente in Epoxyharzformulierungen, als Kopplungsreagenz in Primerlösungen, als Versiegler auf anorganischen Substraten, als reaktives Bindemittel sowie als Co-Bindemittel.

## Claims

1. Composition comprising water and a mixture of [3-(2,3-dihydroxyprop-1-oxy)propyl]silanol oligomers and ethers thereof, wherein the proportion of epoxy groups bound within Si compounds which may be present in the composition is not more than 0.05 mol of epoxy groups per mole of Si in the composition.

2. Composition according to Claim 1,
wherein the proportion of epoxy groups bound within Si compounds which may be present in the composition is 0 to 0.04 mol of epoxy groups per mole of Si in the composition.

3. Composition according to either of Claims 1 and 2,
wherein the composition comprises [3-(2,3-dihydroxyprop-1-oxy)propyl]silanol oligomers or ethers thereof of the general formula I
Y-Si(OH)₂O_{1/2}[Y-Si(OH)O_{2/2}]ₙ[Y-SiO_{3/2}]ₘ(Y-)Si(OH)₂O_{1/2} (I)
where n≥0 and m≥0, Y groups are R"O-CH₂-CH(OR')-CH-O-C₃H₆- and the R' and R" groups are the same or different and may be H, methyl and ethyl.

4. Composition according to any of Claims 1 to 3,
wherein the composition may contain silanols of the general formula II
Y-Si(OH)(OR)₂ (II)
where Y group is R"O-CH₂-CH(OR')-CH-O-C₃H₆- and the R, R' and R" groups are the same or different and may be H, methyl and ethyl.

5. Composition according to any of Claims 1 to 4,
wherein the composition has an active ingredient content of compounds of the formula I including compounds of the formula II of up to 80% by weight, based on the overall composition.

6. Composition according to any of Claims 1 to 5,
wherein the composition has been acidified and contains formic acid or acetic acid.

7. Composition according to any of Claims 1 to 6,
wherein the composition contains not more than 1% by weight of free alcohol, where the % by weight figure is based on the composition and the alcohol is selected from the group of methanol and ethanol.

8. Composition according to any of Claims 1 to 7,
wherein the composition is water-dilutable.

9. Process for producing a composition according to any of Claims 1 to 8,
by
- in step 1 using 3-glycidyloxypropyltrimethoxysilane or 3-glycidyloxypropyltriethoxysilane or a mixture of 3-glycidyloxypropyltrimethoxysilane and 3-glycidyloxypropyltriethoxysilane as 3-glycidyloxypropyltrialkoxysilane and combining and mixing it in the presence of an acid with a defined amount of distilled, demineralized or deionized water within 10 to 30 minutes,
- in step 2 heating the reaction mixture and stirring it at 55 to 70°C for 1.5 to 5 hours,
- then in step 3, under reduced pressure at a temperature in the range from 40 to 55°C over at least 10 hours, distilling an alcohol/water mixture and at the same time replacing it, based on weight, with distilled, demineralized or deionized water and conducting the distillation over at least 10 hours until the top product of the distillation column ultimately contains only water.

10. Process according to Claim 9,
that, in step 1, the 3-glycidyloxypropyltrialkoxysilane and water are used in a molar ratio of 1:3 to 60.

11. Process according to Claim 9 or 10,
that, in step 1, the acid used is formic acid or acetic acid in a molar ratio to 3-glycidyloxypropyltrialkoxysilane of 0.03 to 0.06:1.

12. Aqueous composition obtainable according to any of Claims 9 to 11.

13. Use of a composition according to any of Claims 1 to 8 or obtainable according to Claim 12 or prepared according to any of Claims 9 to 11 as component in epoxy resin formulations, as coupling reagent in primer solutions, as sealant on inorganic substrates, as reactive binder and as co-binder.

## Revendications

1. Composition contenant de l'eau et un mélange d'oligomères de [3-(2,3-dihydroxyprop-1-oxy)propyl]silanol, ainsi que leurs éthers, la proportion de groupes époxy qui peuvent être reliés dans des composés de Si et présents dans la composition étant inférieure ou égale à 0,05 mole de groupes époxy par mole de Si dans la composition.

2. Composition selon la revendication 1, dans laquelle la proportion de groupes époxy qui peuvent être reliés dans des composés de Si et présents dans la composition est de 0 à 0,04 mole de groupes époxy par mole de Si dans la composition.

3. Composition selon la revendication 1 ou 2, dans laquelle la composition contient des oligomères de [3-(2,3-dihydroxyprop-1-oxy)propyl]silanol ou leurs éthers selon la formule générale I
Y-Si(OH)₂O_{1/2}[Y-Si(OH)O_{2/2}]ₙ[Y-SiO_{3/2}]ₘ(Y-)Si(OH)₂O_{1/2} (I)
dans laquelle n ≥ 0 et m ≥ 0, les groupes Y représentent R"O-CH₂-CH(OR')-CH-O-C₃H₆- et les groupes R' et R" sont identiques ou différents et peuvent représenter H, méthyle et éthyle.

4. Composition selon l'une quelconque des revendications 1 à 3, dans laquelle la composition peut contenir des silanols de formule générale II
Y-Si(OH)(OR)₂ (II)
dans laquelle le groupe Y représente R"O-CH₂-CH(OR')-CH-O-C₃H₆- et les groupes R, R' et R" sont identiques ou différents et peuvent représenter H, méthyle et éthyle.

5. Composition selon l'une quelconque des revendications 1 à 4, dans laquelle la composition présente une teneur en agents actifs composés de formule I et composés de formule II de 80 % en poids, par rapport à l'ensemble de la composition.

6. Composition selon l'une quelconque des revendications 1 à 5, dans laquelle la composition est acidifiée et contient de l'acide formique ou de l'acide acétique.

7. Composition selon l'une quelconque des revendications 1 à 6, dans laquelle la composition a une teneur en alcool libre inférieure ou égale à 1 % en poids, l'indication de % en poids se rapportant à la composition et l'alcool étant choisi dans la série constituée par le méthanol et l'éthanol.

8. Composition selon l'une quelconque des revendications 1 à 7, dans laquelle la composition est diluable avec de l'eau.

9. Procédé de fabrication d'une composition selon l'une quelconque des revendications 1 à 8, selon lequel :
- à l'étape 1, en tant que 3-glycidyloxypropyltrialcoxysilane, du 3-glycidyloxypropyltriméthoxysilane ou du 3-glycidyloxypropyltriéthoxysilane ou un mélange de 3-glycidyloxypropyltriméthoxysilane et de 3-glycidyloxypropyltriéthoxysilane est utilisé, et réuni et mélangé en présence d'un acide avec une quantité définie d'eau, qui est distillée, dessalée ou déionisée, en 10 à 30 minutes,
- à l'étape 2, le mélange réactionnel est chauffé et agité à une température de 55 à 70 °C pendant 1,5 à 5 heures,
- puis, à l'étape 3, un mélange alcool/eau est distillé pendant au moins 10 heures sous pression réduite à une température dans la plage allant de 40 à 55 °C, et simultanément remplacé, en poids, par de l'eau, qui est distillée, dessalé ou déionisée, et la distillation est réalisée pendant au moins 10 heures et jusqu'à ce que le produit de tête de la colonne de distillation ne contienne au final que de l'eau.

10. Procédé selon la revendication 9, qu'à l'étape 1, le 3-glycidyloxypropyltrialcoxysilane et l'eau sont utilisés en un rapport molaire de 1 sur 3 à 60.

11. Procédé selon la revendication 9 ou 10, qu'à l'étape 1, de l'acide formique ou de l'acide acétique est utilisé en tant qu'acide en un rapport molaire par rapport au 3-glycidyloxypropyltrialcoxysilane de 0,03 à 0,06 sur 1.

12. Composition aqueuse pouvant être obtenue selon l'une quelconque des revendications 9 à 11.

13. Utilisation d'une compositon selon l'une quelconque des revendications 1 à 8 ou pouvant être obtenue selon la revendication 12 ou fabriquée selon l'une quelconque des revendications 9 à 11 en tant que composant dans des formulations de résines époxy, en tant que réactif de couplage dans des solutions d'apprêts primaires, en tant qu'agent de scellement sur des substrats inorganiques, en tant que liant réactif et en tant que co-liant.
